(19) Europäisches Patentamt
European Patent Office
Office européen des brevets

(11) **EP 2 505 502 B1**

(12) **FASCICULE DE BREVET EUROPEEN**

(45) Date de publication et mention
de la délivrance du brevet:
**16.10.2013 Bulletin 2013/42**

(51) Int Cl.:
**B64D 35/04** *(2006.01)*
**G01D 7/02** *(2006.01)*
**B64D 43/00** *(2006.01)*
**G01D 7/10** *(2006.01)*

(21) Numéro de dépôt: **12001762.9**

(22) Date de dépôt: **15.03.2012**

(54) **Procédé, dispositif d'aide au pilotage d'un aéronef, et aéronef**

Verfahren, Vorrichtung zur Unterstützung der Steuerung eines Luftfahrzeugs, und Luftfahrzeug

Method and device to assist piloting of an aircraft, and aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2011 FR 1100936**

(43) Date de publication de la demande:
**03.10.2012 Bulletin 2012/40**

(73) Titulaire: **EUROCOPTER**
**13725 Marignane Cédex (FR)**

(72) Inventeurs:
• **Corpron, Alban**
**13300 Salon de Provence (FR)**

• **Petit, Stéphane**
**13890 Mouries (FR)**

(74) Mandataire: **GPI & Associés**
**Europarc de Pichaury**
**Bât B2.9 - 1er Et.**
**1330, rue Guillibert de la Lauzière**
**13856 Aix en Provence Cedex 3 (FR)**

(56) Documents cités:
**EP-A1- 2 258 615        FR-A1- 2 756 256**
**US-A1- 2005 278 084**

**Description**

La présente invention concerne un procédé et un dispositif d'aide au pilotage d'un aéronef, ainsi qu'un aéronef en particulier un giravion muni d'un rotor principal de sustentation et de propulsion ainsi que d'un rotor arrière de contrôle en lacet.

Les giravions sont généralement pourvus d'une installation motrice comprenant au moins un moteur, tel qu'un moteur thermique de type turbomoteur à turbine libre. La puissance est alors prélevée sur un étage basse pression de chaque turbine libre qui tourne sensiblement entre 20 000 et 50 000 tours par minute. Par suite, l'installation motrice inclut une boîte de réduction de vitesse pour lier les turbines libres au rotor principal d'avancement et de sustentation puisque la vitesse de rotation de ce rotor est sensiblement comprise entre 200 et 400 tours par minute: il s'agit de la boîte de transmission principale de puissance.

Les limitations thermiques d'un turbomoteur, et les limitations en couple d'une boîte de transmission principale, permettent de définir une enveloppe de fonctionnement du turbomoteur englobant deux régimes normaux d'utilisation d'un turbomoteur agencé sur un giravion monomoteur ou bimoteur:

- le régime de décollage correspondant à un niveau de couple pour la boîte de transmission principale et un échauffement du turbomoteur admissibles pendant un temps limité sans dégradation notable, ce régime de décollage étant défini par une puissance maximale au décollage PMD et une durée d'utilisation de cette puissance maximale au décollage généralement de l'ordre de cinq minutes,

- le régime maximal continu, ce régime maximal continu étant défini par une puissance maximale en continu PMC correspondant environ à 90% de la puissance maximale au décollage PMD et par une durée d'utilisation de cette puissance maximale en continu généralement illimitée,

- le régime de puissance étendue, ce régime de puissance étendue étant défini par une puissance étendue sensiblement équivalente voire égale à la puissance maximale au décollage PMD et par une durée d'utilisation de cette puissance étendue de l'ordre de trente minutes,

- un régime transitoire buté par la régulation de l'installation motrice défini par une puissance maximale en transitoire PMT.

Sur un giravion bimoteur, l'enveloppe de fonctionnement englobe aussi des régimes de surpuissance d'urgence, uniquement utilisés lorsque l'un des deux turbomoteurs est en panne :

- le premier régime d'urgence, ce premier régime d'urgence étant défini par une puissance de super urgence PSU dénommé parfois « OEI 30" » souvent égale à environ 112% à 120% de la puissance maximale au décollage PMD et par une durée d'utilisation de cette puissance de super urgence PSU généralement de l'ordre trente secondes consécutives au maximum, la puissance de super urgence étant classiquement utilisable trois fois pendant un vol,

- le deuxième régime d'urgence, ce deuxième régime d'urgence étant défini par une puissance maximale d'urgence PMU dénommé parfois « OEI 2' » égale à environ 105% à 110% de la de la puissance maximale au décollage PMD et par une durée d'utilisation de cette puissance maximale d'urgence PMU de l'ordre deux minutes consécutives au maximum ;

- le troisième régime d'urgence, ce troisième régime d'urgence étant défini par une puissance intermédiaire d'urgence PIU dénommé parfois « OEI cont » sensiblement égale à la puissance maximale au décollage PMD et par une durée d'utilisation illimitée de cette puissance intermédiaire d'urgence PIU pour le reste du vol après la panne du turbomoteur.

Le motoriste établit, par calculs ou par essais, les courbes de puissance disponible d'un turbomoteur en fonction de l'altitude et de la température extérieure, et cela pour chacun des régimes définis ci-dessus.

De plus, le motoriste détermine des limitations de chaque turbomoteur permettant d'obtenir les puissances PMC, PMD, PMT , PSU, PMU, PIU correspondant à chaque régime précité et une durée de vie acceptable. Ces limites sont généralement surveillées par l'intermédiaire de trois paramètres de surveillance du turbomoteur : la vitesse de rotation du générateur de gaz du turbomoteur, le couple moteur et la température des gaz à l'entrée de la turbine libre basse pression du turbomoteur respectivement dénommés Ng, Cm et T45 par l'homme du métier. Si le turbomoteur comporte un étage de turbine haute pression, il est possible d'utiliser la température des gaz à l'entrée de la turbine haute pression dénommée TET, cette température des gaz à l'entrée de la turbine haute pression étant difficilement mesurable et par suite calculée à partir de la température des gaz à l'entrée de la turbine libre T45.

Ainsi, pour chaque régime de l'enveloppe de fonctionnement du moteur, le motoriste établit des limites pour chaque paramètre de surveillance ces limites pouvant varier en fonction des conditions extérieures à savoir la pression extérieure P0 et la température extérieure T0 présentes à l'extérieur de l'aéronef.

Par exemple, pour un aéronef monomoteur le motoriste détermine:

- des premières limites en température $T4_{lim\ PMD}$, $T4_{lim\ PMC}$, et $T4_{lim\ PMT}$ correspondant à la température des gaz à l'entrée de la turbine libre basse pression du moteur lorsque ce moteur développe respectivement la puissance maximale au décollage ainsi que la puissance maximale continue et la puissance maximale en transitoire, ces premières limites étant variables en fonction des conditions extérieures,

- des deuxièmes limites $NG_{\text{lim } PMD}$, $NG_{\text{lim } PMC}$, et $NG_{\text{lim } PMT}$ correspondant à la vitesse de rotation du générateur de gaz du moteur lorsque ce moteur développe respectivement la puissance maximale au décollage ainsi que la puissance maximale continue et la puissance maximale en transitoire, ces deuxièmes limites étant variables en fonction des conditions extérieures,

- des troisièmes limites $TQ_{\text{lim } PMD}$, $TQ_{\text{lim } PMC}$, et $TQ_{\text{lim } PMT}$ correspondant au couple exercé sur l'arbre de sortie du moteur lorsque ce moteur développe respectivement la puissance maximale au décollage ainsi que la puissance maximale continue et la puissance maximale en transitoire, ces troisièmes limites étant variables en fonction des conditions extérieures.

Il est à noter que les troisièmes limites peuvent être mesurées par analogie à l'aide du couple exercé au niveau de la boîte de transmission principale, au niveau de l'entrée de cette boîte de transmission principale et/ou de son mât d'entraînement du rotor principal par exemple.

Ces différentes limites sont établies par le motoriste et le constructeur de l'aéronef, sous la forme de tableaux, de base de données ou d'équations par exemple.

Le pilote doit donc contrôler son aéronef en prenant en considération les limites adéquates afin de respecter les consignes du motoriste et protéger les ensembles dynamiques de l'hélicoptère.

Pour contrôler ces limites, on connaît des dispositifs d'aide au pilotage.

Le document FR2749545 a pour objet un indicateur de pilotage présentant des informations relatives au paramètre de surveillance du turbomoteur le plus proche de sa valeur limite. Les informations relatives aux limitations à respecter sont ainsi regroupées sur un affichage unique, en permettant, d'une part, d'effectuer une synthèse et de présenter uniquement le résultat de cette synthèse afin de simplifier la tâche du pilote et, d'autre part, de gagner de la place sur la planche de bord. On obtient ainsi un « paramètre limitant », parmi lesdits paramètres de surveillance du turbomoteur, dont la valeur courante est la plus proche de la valeur limite pour ledit paramètre. Pour cette raison, on désignera également ci-après un tel indicateur par l'expression « instrument de première limitation », en abrégé « IPL ».

Par exemple, les différents paramètres de surveillance sont ramenés à une échelle comparable en couple moteur après avoir été comparés à leurs limites respectives, ces limites pouvant être variables en tenant compte de la pression extérieure et de la température extérieure, voire de prélèvements de puissance au niveau du moteur.

En outre, des variantes de cet IPL permettent d'afficher la valeur du paramètre limitant en marge de pas collectif des pales du rotor principal du giravion.

Par exemple, le document FR 2 756 256 suggère de présenter sur un écran d'affichage la marge de puissance disponible pour le moteur avant d'atteindre une limite sur une échelle graduée en équivalent de pas collectif des pales du rotor principal, l'échelle défilant devant un index représentatif du pas collectif desdites pales. Par exemple, l'index est en vis-à-vis d'une première graduation, la limite du paramètre limitant à une puissance donnée étant en vis-à-vis d'une deuxième graduation supérieure à la première graduation. Le pilote connaît alors la marge de pas collectif à sa disposition avant d'atteindre ladite puissance donnée.

Le document EP 0 811 183 présente un dispositif d'aide au pilotage alternatif.

Sur un hélicoptère, on comprend que la puissance développée par l'installation motrice est certes consommée par le rotor principal de sustentation et de propulsion mais aussi par d'autres organes, le rotor arrière par exemple.

Le document FR 2 749 545 suggère de prendre en considération le prélèvement de puissance en établissant la valeur des limites. Bien qu'intéressant, on comprend qu'il peut être troublant pour un pilote d'observer une modification desdites limites alors qu'il n'agit pas sur son levier de commande du pas collectif des pales du rotor principal.

On connaît aussi le document EP 2 258 615, qui est considéré l'état de la technique le plus proche, et le document US 2005278084.

La présente invention a alors pour objet de proposer un procédé et un dispositif d'aide au pilotage d'un aéronef comportant un premier rotor et un deuxième rotor entraînés par une installation motrice comprenant une boîte de transmission principale reliée au moins au premier rotor et au moins un moteur.

Il est à noter que l'on entend par « rotor » soit une hélice tractive ou propulsive, soit un rotor de sustentation et/ ou de propulsion soit un rotor arrière de contrôle en lacet par exemple.

Selon l'invention, un procédé d'aide au pilotage est appliqué à un aéronef comprenant un premier rotor muni d'une pluralité de premières pales ayant un premier pas collectif variable ainsi qu'un deuxième rotor muni d'une pluralité de deuxièmes pales ayant un deuxième pas collectif variable, l'aéronef ayant une installation motrice pourvue d'au moins un moteur fonctionnant selon une pluralité de régimes, l'installation motrice étant surveillée par un calculateur au travers d'une pluralité de paramètre de surveillance prédéterminés.

Le calculateur peut comprendre une unité de calcul de type processeur et une mémoire contenant un programme muni d'une pluralité de segments de codes pour mettre en oeuvre les différentes étapes du procédé. Le calculateur peut être un ordinateur embarqué.

Par exemple, la pluralité de régimes comprend au moins un régime à choisir dans une liste incluant un régime de décollage, un régime maximal continu, un régime de puissance étendue, un régime transitoire, un premier régime d'urgence, un deuxième régime d'urgence et un troisième régime d'urgence. Les paramètres de surveillance peuvent inclure au moins un paramètre à choisir dans une liste incluant la vitesse de rotation d'un générateur de gaz du moteur, le couple du moteur et la température des gaz à l'entrée d'une turbine libre du moteur. Il est possible de mesurer et d'utiliser le couple exercé sur une boîte de transmission de puissance principale de l'installation motrice qui est interposée entre le moteur et un rotor, pour déterminer le couple moteur.

Le procédé peut s'appliquer éventuellement à un hélicoptère muni d'un rotor principal et d'un rotor arrière, un hélicoptère ayant deux rotors contrarotatifs, un aéronef ayant un rotor de sustentation et une hélice, un aéronef muni de deux hélices.

Durant une première étape de ce procédé, le calculateur détermine le premier pas collectif et le deuxième pas collectif à chaque instant, en mesurant la position des commandes de vol par exemple. Le calculateur requiert alors l'affichage d'un index pointant le premier pas collectif et le deuxième pas collectif dans un diagramme, ce diagramme étant muni d'un premier axe et d'un deuxième axe gradués en unité de pas collectif relatifs respectivement au premier pas collectif et au deuxième pas collectif.

De plus, durant une deuxième étape réalisée en parallèle de la première étape, le calculateur détermine un paramètre limitant correspondant au paramètre de surveillance le plus proche de sa limite au régime de fonctionnement courant du moteur. Par exemple, le calculateur détermine la puissance à fournir pour qu'un paramètre de surveillance atteigne sa limite associée au régime de fonctionnement utilisé par le moteur, le paramètre limitant étant le paramètre de surveillance associé à la plus petite puissance. Il est aussi possible d'exprimer chaque paramètre de surveillance en pourcent par rapport à sa limite, le paramètre limitant étant le paramètre de surveillance ayant la plus petite marge en pourcent. On peut se référer à l'état de la technique pour obtenir des informations relatives à la détermination d'un paramètre limitant.

Par ailleurs, on qualifie de « courant » une information en temps réel, l'adjectif « instantané » étant parfois utilisé par l'homme du métier

A partir du paramètre limitant, le calculateur détermine au moins une marge de puissance disponible pour le moteur en temps réel, chaque marge de puissance correspondant à la puissance à fournir afin que le paramètre limitant atteigne une limite associée à un desdits régimes. Par exemple, on détermine une marge de puissance associée à chacun des régimes de fonctionnement prédéterminés du moteur.

Dès lors, le calculateur détermine une courbe limite de puissance par marge de puissance et affiche cette courbe limite dans le diagramme pour indiquer au pilote la marge de premier pas collectif et de deuxième pas collectif disponible avant d'atteindre la limite de chaque régime.

Chaque courbe limite est une fonction donnant par exemple le deuxième pas collectif en fonction du premier pas collectif, de façon à afficher l'ensemble des couples premier pas collectif/deuxième pas collectif entraînant l'atteinte de la limite associée. Le calculateur peut comprendre une bibliothèque contenant les courbes limites associées à chaque régime et à chaque marge de puissance possibles. Par exemple, si le calculateur mesure une première marge de puissance avant d'atteindre une limite du régime de décollage, et une deuxième marge de puissance avant d'atteindre une limite du régime transitoire et une troisième marge de puissance avant d'atteindre une limite du régime maximal continu, le calculateur affiche une première, une deuxième et une troisième courbe correspondant respectivement auxdites marges de puissance en faisant appel à sa bibliothèque par exemple.

Par conséquent, selon ce procédé, on met en oeuvre un affichage à deux dimensions pour montrer au pilote le premier pas collectif et le deuxième pas collectif à sa disposition avant d'atteindre une limite moteur.

Par exemple, un rotor arrière d'un hélicoptère consommant jusqu'à 15% de la puissance délivrée par l'installation motrice, sa prise en compte améliore la précision du dispositif d'aide au pilotage. De plus, le pilote visualise parfaitement l'effet de ses actions sur les commandes du premier pas collectif et du deuxième pas collectif.

Sur un hélicoptère, le procédé évite en outre une modification des limites éventuellement déstabilisante pour un pilote novice, suite à une commande du pas collectif du rotor arrière à l'aide d'un palonnier et sans action sur le levier de commande de pas collectif du rotor principal.

Le procédé peut de plus comporter une ou plusieurs des caractéristiques additionnelles qui suivent.

Par exemple, le premier pas collectif et le deuxième pas collectif étant chacun mécaniquement bornés entre deux extremums, on tronque une courbe limite si cette courbe limite atteint un des extremums à l'aide d'une droite orthogonale à un des axes du diagramme passant par l'extremum atteint. La précision des informations présentées est alors augmentée.

Selon un autre aspect, le calculateur peut déterminer et afficher une courbe d'endommagement de l'installation motrice en déterminant un écart de puissance entre la puissance courante développée par le moteur et une puissance seuil prédéterminée générant un endommagement minimal.

Dès lors, si le pilote veut optimiser les opérations de maintenance et la durée de vie de l'installation motrice, il peut piloter l'aéronef de manière à positionner l'index au plus près de la courbe d'endommagement.

L'endommagement divergeant à partir d'une valeur seuil dans un graphe présentant un paramètre de surveillance en abscisse et l'endommagement en ordonnée, la puissance seuil est égale à la puissance développée par le moteur lorsque le paramètre de surveillance atteint la valeur seuil.

Selon un autre aspect, le calculateur peut déterminer et afficher une courbe de consommation optimale de carburant de l'installation motrice en déterminant un intervalle de puissance entre la puissance courante développée par le moteur et une puissance limite prédéterminée, la puissance limite prédéterminée correspondant à la puissance à développer afin que l'aéronef atteigne une vitesse d'avancement prédéterminée connue par l'homme du métier sous l'acronyme « VBR » et dénommée « Velocity of Best Range » en langue anglaise.

Dès lors, si le pilote veut optimiser les performances globales de l'aéronef en termes de dépenses énergétiques, il peut piloter l'aéronef de manière à positionner l'index au plus près de la courbe de consommation optimale.

En effet, à basse vitesse, l'efficacité du moteur d'un point de vue consommation de carburant est relativement basse mais la traînée aérodynamique de l'aéronef est faible. A l'inverse, à haute vitesse, l'efficacité du moteur d'un point de vue consommation de carburant est relativement bonne mais la traînée aérodynamique de l'aéronef est importante. On note que l'on obtient un compromis optimal à la vitesse d'avancement prédéterminée. Le procédé prévoit donc selon cette variante d'afficher l'ensemble des couples premier pas collectif/ deuxième pas collectif entraînant ladite vitesse prédéterminée.

Par ailleurs, l'index est éventuellement affiché à l'intersection du premier axe et du deuxième axe. Le pilote identifie alors très rapidement la situation. L'index est alors soit une croix marquée à l'intersection soit tout simplement le point d'intersection du premier axe et du deuxième axe par exemple.

Selon une réalisation, le premier axe et le deuxième axe sont mobiles l'un par rapport à l'autre, le calculateur déplaçant le premier axe le long du deuxième axe lorsque le deuxième pas collectif varie, et le calculateur déplaçant ce deuxième axe le long du premier axe lorsque le premier pas collectif varie. Les diverses courbes affichées ne bougent pas, sauf en cas de modifications des limites provoquées notamment par une modification des conditions extérieures voire de l'état de santé du ou des moteurs.

Selon une autre réalisation, le calculateur déplace les graduations du premier axe lorsque le premier pas collectif varie et déplace les graduations du deuxième axe lorsque le deuxième pas collectif varie, lesdites courbes se déplaçant en conséquence.

Selon une variante, l'installation motrice comprenant une pluralité de moteurs, le calculateur affiche les informations relatives au moteur ayant le paramètre limitant le plus proche de sa limite.

De plus, le calculateur peut déterminer et afficher un pointeur prédictif dans le diagramme du moyen d'affichage, ce pointeur présentant au début d'une manoeuvre le premier pas collectif et le deuxième pas collectif que l'aéronef devrait atteindre à l'issue de cette manoeuvre.

En effet, durant une période transitoire, les informations affichées peuvent ne pas correspondre à la situation courante, à cause par exemple du retard observé entre le moment où un pilote applique le pas collectif requis et le moment où un couple résistant apparaît sur le rotor, voire de l'accélération progressive du moteur pour passer d'une premier stade correspondant à la délivrance d'un faible couple vers un deuxième stade correspondant à la délivrance d'un couple important.

Par exemple, le dispositif d'aide au pilotage présente une courbe limite comprenant un point séparé de l'index par un premier pas collectif de 4 degrés et un deuxième pas collectif nul. Si le pilote manoeuvre sa commande pour requérir par erreur un premier pas collectif de 6 degrés, le premier pas collectif va augmenter progressivement. Le pilote n'est alors pas conscient qu'une limite va être dépassée. Par contre, en affichant par contre dès le début de la manoeuvre le pointeur, on informe le pilote qu'il va faire fonctionner le moteur au-delà de ladite limite pour permettre au pilote de corriger son ordre.

De même, le calculateur peut déterminer un paramètre limitant prédictif en appliquant l'enseignement du document FR 2 871 520 par exemple, et afficher une courbe prédictive dans le diagramme du moyen d'affichage, cette courbe prédictive présentant au début d'une manoeuvre l'ensemble des couples premier pas collectif/ deuxième pas collectif engendrant ledit paramètre prédictif.

Ainsi, le moyen de traitement peut calculer le paramètre limitant prédictif à partir de la loi prédictive, où IPT, IPL, k et dIPL/dt correspondent respectivement à la valeur estimée du paramètre limitant prédictif, la valeur courante du paramètre limitant, un coefficient multiplicateur et la variation de la valeur courante au cours d'un intervalle de temps :

$$IPT = IPL + (k\frac{dIPL}{dt})^4$$

Selon une autre technique, le constructeur établit des modèles de performance des rotors et des moteurs par essais. A partir de l'ordre donné par le pilote, le moyen de traitement détermine la puissance finale qui sera consommée par les rotors, puis en déduit une courbe prédictive présentant au début d'une manoeuvre l'ensemble des couples premier pas collectif/ deuxième pas collectif engendrant ladite puissance finale.

Outre un procédé, l'invention vise un dispositif d'aide au pilotage mettant en oeuvre ce procédé.

Selon l'invention, le dispositif d'aide au pilotage d'un aéronef comporte des capteurs de mesure d'une pluralité de paramètres de surveillance prédéterminés de l'installation motrice, cet aéronef comprenant un premier rotor muni d'une pluralité de premières pales ayant un premier pas collectif variable ainsi qu'un deuxième rotor muni d'une pluralité de deuxièmes pales ayant un deuxième pas collectif variable, ledit aéronef ayant une installation motrice pourvue d'au moins un moteur fonctionnant selon une pluralité de régimes.

Ce dispositif est notamment remarquable en ce qu'il comporte un premier moyen de mesure du premier pas collectif et un deuxième moyen de mesure du deuxième pas collectif ainsi qu'un moyen d'affichage reliés au calculateur, le dispositif comportant un index commandé par le calculateur pointant sur le moyen d'affichage ledit premier pas collectif et ledit deuxième pas collectif dans un diagramme muni d'un premier axe et d'un deuxième axe gradués en unité de pas collectif relatifs respectivement au premier pas collectif et au deuxième pas collectif, le calculateur déterminant à l'aide des capteurs de mesure au moins une marge de puissance disponible du moteur correspondant à la puissance à fournir afin qu'un paramètre limitant atteigne une limite associée à un desdits régimes pour afficher une courbe limite de puissance disponible par marge de puissance dans ledit diagramme matérialisant pour le pilote la marge de premier pas collectif et de deuxième pas collectif disponible avant d'atteindre la limite d'au moins un régime.

De plus, le premier moyen de mesure mesurant le premier pas collectif courant et le deuxième moyen de mesure mesurant le deuxième pas collectif courant en temps réel, le dispositif peut comporter des organes de mesure d'un premier ordre de premier pas collectif et d'un deuxième ordre d'un deuxième pas collectif pour afficher un pointeur prédictif.

L'invention vise aussi un aéronef comprenant un premier rotor muni d'une pluralité de premières pales ayant un premier pas collectif variable ainsi qu'un deuxième rotor muni d'une pluralité de deuxièmes pales ayant un deuxième pas collectif variable, cet aéronef ayant une installation motrice pourvue d'au moins un moteur fonctionnant selon une pluralité de régimes, l'aéronef ayant une première chaîne de commande incluant une première commande reliée auxdites premières pales et une deuxième chaîne de commande incluant une deuxième commande reliée auxdites deuxièmes pales.

Cet aéronef est notamment remarquable en ce qu'il comporte un dispositif d'aide au pilotage tel que décrit ci dessus.

On note qu'un premier moyen de mesure du premier pas collectif peut être agencé sur la première chaîne de commande, un deuxième moyen de mesure du deuxième pas collectif étant agencé éventuellement sur la deuxième chaîne de commande.

L'invention et ses avantages apparaîtront avec plus de détails dans le cadre de la description qui suit avec des exemples de réalisation donnés à titre illustratif en référence aux figures annexées qui représentent :

- la figure 1, un schéma présentant un aéronef et un dispositif d'aide au pilotage selon l'invention,

- les figures 2 à 4, des vues du moyen d'affichage explicitant le procédé mis en oeuvre,

- les figures 5 et 6, des graphes explicitant le calcul d'un paramètre limitant, et

- la figure 7, un graphe explicitant comment déterminer une valeur seuil,

- la figure 8, un graphe présentant la vitesse d'avancement prédéterminée, et

- les figures 9 et 10 des figures explicitant notamment une variante munie de graduations mobiles.

Les éléments présents dans plusieurs figures distinctes sont affectés d'une seule et même référence.

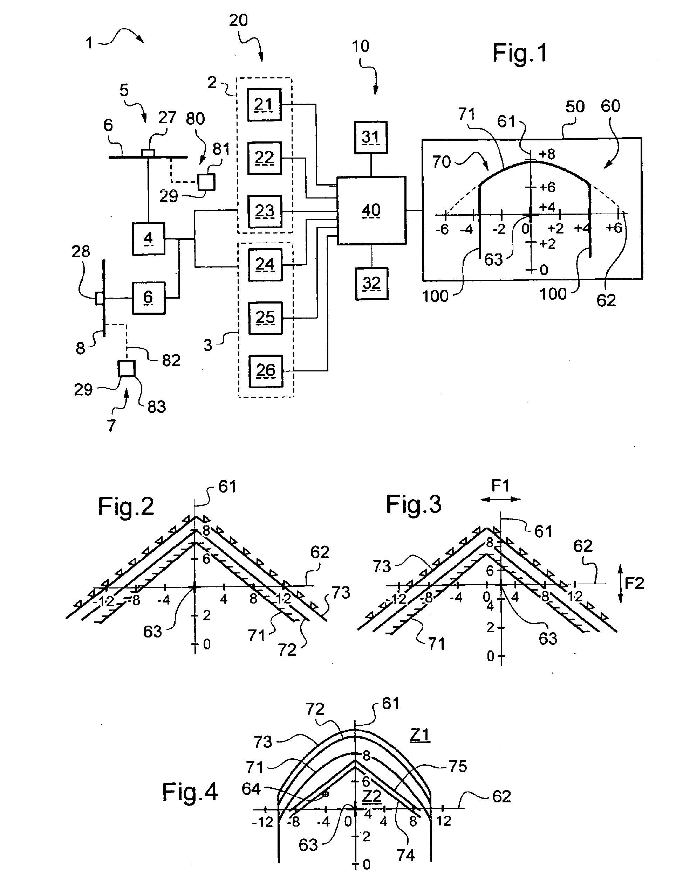

La figure 1 présente un aéronef 1 pourvu d'un premier rotor 5 comprenant une pluralité de premières pales 6 ayant un premier pas collectif variable, et d'un deuxième rotor 7 comprenant une pluralité de deuxièmes pales 8 ayant un deuxième pas collectif variable.

Par exemple, l'aéronef 1 est un hélicoptère, le premier rotor représentant le rotor principal de sustentation et de propulsion de l'hélicoptère alors que le deuxième rotor représente le rotor arrière de cet hélicoptère.

L'aéronef 1 possède de plus une première chaîne de commande 80 incluant une première commande 81 de type levier de pas collectif par exemple afin qu'un pilote puisse commander le premier pas collectif, et une deuxième chaîne de commande 82 incluant une deuxième commande 83 de type palonnier par exemple afin qu'un pilote puisse commander le deuxième pas collectif.

Pour mettre en rotation le premier rotor 5 et le deuxième rotor 7, l'aéronef inclut une installation motrice munie d'au moins un moteur par exemple de type turbomoteur et d'au moins une boîte de transmission. Par exemple, cette installation motrice comprend un premier moteur 2 et un deuxième moteur 3 entraînant le premier rotor 5 par une boîte de transmission principale 4 et le deuxième rotor 7 par une boîte de transmission arrière 6. D'autres architectures sont évidemment possibles.

Les moteurs fonctionnent selon une enveloppe de fonctionnement incluant une pluralité de régimes à choisir par exemple dans une liste incluant un régime de décollage PMD, un régime maximal continu PMC, un régime transitoire PMT, un premier régime d'urgence PSU, un deuxième régime d'urgence PMU et un troisième régime d'urgence PIU.

L'aéronef 1 comporte de plus un dispositif 10 d'aide au pilotage comprenant un calculateur 40.

Ce calculateur 40 est relié par des connections filaires ou non filaires à des capteurs de mesure 20 de paramètres de surveillance des moteurs 2, 3. Les paramètres de surveillance incluent au moins un paramètre à choisir dans une liste incluant la vitesse de rotation Ng d'un générateur de gaz de chaque moteur, le couple TQ de chaque moteur et une température des gaz notamment la température des gaz T45 à l'entrée d'une turbine libre basse pression de chaque moteur.

Dès lors, le dispositif 10 d'aide au pilotage possède un capteur de mesure 21, 24 de la vitesse de rotation Ng de chaque moteur, un capteur de mesure 22, 25 du couple TQ développé par chaque moteur, et un capteur de mesure 23, 26 de la température des gaz T45 de chaque moteur. Il est à noter que l'on peut mesurer le couple exercé sur une boîte de transmission pour déterminer le couple exercé par l'ensemble de moteurs 2, 3.

Par ailleurs, le dispositif 10 d'aide au pilotage comprend un senseur 31 de la pression extérieure P0 et un senseur 32 de la température extérieure T0 qui sont reliés au calculateur 40.

En outre, le calculateur 40 est relié à un moyen d'affichage 50.

Dès lors, le dispositif 10 d'aide au pilotage met en oeuvre un premier moyen de mesure 27 du premier pas collectif agencé sur la première chaîne de commande 80 et un deuxième moyen de mesure 28 du deuxième pas collectif, des capteurs présents sur des bielles de commande de pas des pales ou sur les commandes de vol par exemple. Ces moyens de mesure communiquent avec le calculateur 40 par des liaisons filaires ou non filaires qui ne sont pas représentées sur la figure 1 pour ne pas alourdir inutilement cette figure.

Selon le procédé de l'invention mis en oeuvre par ce dispositif 10, le calculateur 40 détermine le premier pas collectif et le deuxième pas collectif en utilisant les informations transmises par les moyens de mesure. Par conséquent, le dispositif 10 d'aide au pilotage inclut un index 63 pour présenter ce premier pas collectif et ce deuxième pas collectif sur le moyen d'affichage.

En effet, le dispositif 10 comprend un diagramme muni d'un premier axe 61 gradué en pas du premier pas collectif et un deuxième axe 62 gradué en pas du deuxième pas collectif. L'index 63 correspond par exemple à l'intersection du premier axe et du deuxième axe. Sur l'exemple de la figure 1, le premier pas collectif a une valeur de 4 degrés, le deuxième pas collectif ayant une valeur de 0 degrés.

Il est à noter que la graduation minimale du premier axe peut correspondre au plein petit pas, la graduation maximale correspondant au plein grand pas, les expressions « plein grand pas » et « plein petit pas » étant couramment utilisées par l'homme du métier.

Par ailleurs, le calculateur 40 détermine le paramètre limitant de l'installation motrice, à savoir le paramètre de surveillance le plus proche de sa limite associée au régime de fonctionnement courant des moteurs 2, 3. De plus, le calculateur 40 détermine la marge de puissance disponible entre la puissance courante développée par les moteurs 2, 3 et la puissance développable par les moteurs 2, 3 à chaque régime de fonctionnement des moteurs 2, 3.

Il est possible de mettre en oeuvre l'enseignement de l'état de la technique à l'aide des senseurs de pression extérieure et de température extérieure, ainsi qu'en utilisant les capteurs de mesure 20.

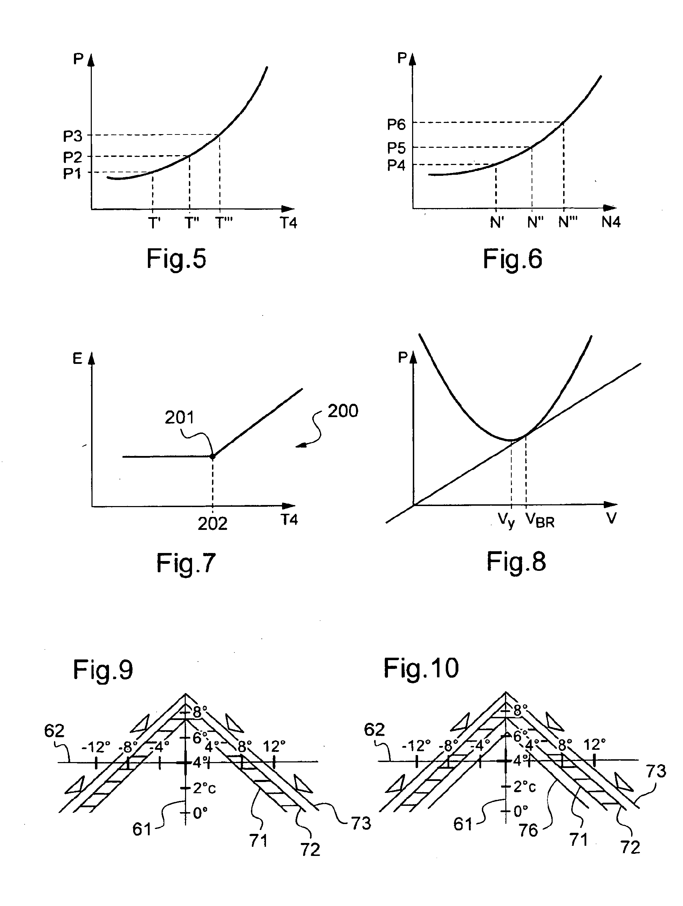

Par exemple, en référence à la figure 5, le motoriste établit des abaques fournissant la puissance délivrée par un moteur en fonction de la température des gaz, des températures limites apparaissant sur ces abaques.

Ainsi, lorsque le turbomoteur possède une température courante T' dans des conditions extérieures données, le moteur développe une première puissance P1. Par rapport à un régime ayant une deuxième limite en température T'' correspondant à une puissance P2 et un régime ayant une troisième température T''' correspondant une puissance P3, le moteur dispose respectivement d'une première marge de puissance égale à la première différence entre la deuxième puissance P2 et la première puissance P1, et d'une deuxième marge de puissance égale à la deuxième différence entre la troisième puissance P3 et la première puissance P1.

En référence à la figure 6, le même procédé peut être appliqué à la vitesse de rotation NG du générateur de gaz du moteur.

Pour le couple du moteur, il est possible d'obtenir la puissance courante correspondante en multipliant le couple mesuré sur un organe tournant par la vitesse de rotation de cet organe tournant, puis de comparer cette puissance courante aux puissances développées par le moteur aux différents régimes.

Le paramètre limitant peut alors être le paramètre de surveillance induisant la marge de puissance la plus faible avec le régime courant.

Selon un autre algorithme, on détermine la marge en pourcent de chaque paramètre de surveillance avec sa limite au régime courant. Par exemple, si la température mesurée est de 400°C alors que ladite limite est de 500°C, le calculateur 40 en déduit une marge en température de 20%.

Le paramètre limitant est alors le paramètre de surveillance ayant la marge en pourcent la plus faible. Dès lors, ce calculateur fait appel à des abaques prédéterminés par le motoriste fournissant une marge de puissance en fonction de la marge en pourcent d'un paramètre.

On se référera à la littérature pour obtenir plus d'informations.

En référence à la figure 1, le calculateur 40 détermine alors une courbe limite 70 par marge puissance déterminée précédemment. Chaque courbe limite 70 du dispositif 10 représente les couples premier pas collectif/deuxième pas collectif susceptibles d'induire le fonctionnement aux limites du régime de fonctionnement associé. On comprend donc que lorsque l'index 63 est placé sur une courbe limite, le moteur développe la puissance maximale du régime associé.

La courbe limite est obtenue par exemple à l'aide d'une bibliothèque mémorisée dans le calculateur fournissant les équations des courbes limites en fonction des marges de puissance.

Par ailleurs, le premier pas collectif et le deuxième pas collectif peuvent être mécaniquement bornés entre deux extremums. Dès lors, le calculateur peut tronquer chaque courbe limite 70 si cette courbe limite atteint lesdits extremums.

Selon l'exemple de la figure 1, le deuxième pas collectif est borné entre deux extremums valant -4° et 4°. Le calculateur 40 tronque alors la courbe limite 71 à l'aide de deux droites 100 orthogonales au deuxième axe 62 passant lesdits extremums.

Selon un autre aspect, lorsque l'installation motrice comporte une pluralité de moteurs, le dispositif 10 présente les informations du moteur le plus limitant, à savoir le moteur présentant le paramètre limitant le plus proche de sa limite.

La figure 1 fait en outre apparaître une unique courbe limite 71.

Cependant, en référence à la figure 2, le dispositif 10 peut comprendre une pluralité de courbes limites 70, une courbe limite par régime de fonctionnement éventuellement. Par exemple, les courbes limites 70 incluent une courbe limite 71 représentant le régime maximal continu, une courbe limite 72 représentant le régime de décollage et une courbe limite 73 représentant le régime transitoire.

Si une pluralité de courbes limites est affichée, chaque courbe peut avoir une représentation distincte des autres courbes pour permettre au pilote d'identifier aisément les diverses courbes.

Lorsque le premier pas collectif et/ou le deuxième pas collectif varient, le premier axe 61 et le deuxième axe 62 peuvent avoir des mouvements relatifs.

En référence à la figure 3, le calculateur 40 peut déplacer le premier axe 61 le long du deuxième axe 62 selon la flèche F1 lorsque le deuxième pas collectif varie, et le calculateur 40 déplace le deuxième axe 62 le long du premier axe 61 selon la flèche F2 lorsque le premier pas collectif varie.

On constate que les courbes limites 70 n'ont pas bougé par rapport à la figure 2.

Selon une autre variante représentée sur les figures 9 et 10, le calculateur 40 déplace les graduations du premier axe 61 lorsque le premier pas collectif varie et déplace les graduations du deuxième axe 62 lorsque le deuxième pas collectif varie, les diverses courbes affichées 70 se déplaçant en conséquence.

Le calculateur peut aussi déterminer un paramètre limitant prédictif en appliquant l'enseignement du document FR 2 871 520 par exemple. Le dispositif comporte alors une courbe prédictive 76 dans le diagramme du moyen d'affichage, cette courbe prédictive présentant au début d'une manoeuvre l'ensemble des couples premier pas collectif/ deuxième pas collectif engendrant ledit paramètre prédictif.

En référence à la figure 4, les courbes limites 70 ne sont pas nécessairement linéaires.

Par ailleurs, la figure 4 fait aussi apparaître une courbe d'endommagement 74 du dispositif 10 d'aide au pilotage.

En effet, selon cette variante, il est possible d'indiquer au pilote les couples premier pas collectif/ deuxième pas collectif séparant une première zone Z1 correspondant à un fonctionnement très endommageant pour le moteur d'une deuxième zone Z2 correspondant à un fonctionnement faiblement endommageant.

Par suite, le calculateur détermine l'écart de puissance séparant la puissance courante d'une puissance seuil prédéterminée.

En référence à la figure 7, le motoriste établit par calcul ou par essais des graphes 200 fournissant ledit endommagement en fonction d'un paramètre de surveillance, la température des gaz T45 par exemple.

On constate que cet endommagement est relativement stable jusqu'à un point d'inflexion 201 correspondant à une valeur seuil 202 du paramètre de surveillance à partir duquel l'endommagement diverge. La puissance seuil est alors égale à la puissance développée par le moteur lorsque ladite température atteint la valeur seuil.

Par ailleurs, en référence à la figure 1, le dispositif 10 peut aussi comporter une courbe de consommation 75 optimale déterminée par le calculateur 40 et affichée dans le diagramme 60.

Ainsi, le calculateur 40 détermine un intervalle de puissance entre la puissance courante développée par le moteur et une puissance limite prédéterminée

En référence à la figure 8, la puissance limite prédéterminée correspond à la puissance à développer afin que l'aéronef 1 atteigne une vitesse d'avancement prédéterminée VBR.

On rappelle que dans un graphe présentant une courbe relative à la puissance $\underline{P}$ développée par les moteurs en fonction de la vitesse d'avancement $\underline{V}$, la vitesse d'avancement prédéterminée VBR est approximativement obtenue au point de ladite courbe qui est tangent à une droite passant l'origine du graphe. On note que cette vitesse d'avancement prédéterminée VBR est distincte de la vitesse minimale Vy.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé d'aide au pilotage d'un aéronef (1) comprenant un premier rotor (5) muni d'une pluralité de premières pales (6) ayant un premier pas collectif variable ainsi qu'un deuxième rotor (7) muni d'une pluralité de deuxièmes pales (8) ayant un deuxième pas collectif variable, ledit aéronef (1) ayant une installation motrice pourvue d'au moins un moteur (2, 3) fonctionnant selon une pluralité de régimes, ladite installation motrice étant surveillée par un calculateur (40) au travers d'une pluralité de paramètres de surveillance prédéterminés,
   **caractérisé en ce que** ledit calculateur :

   - détermine le premier pas collectif courant et le deuxième pas collectif courant à chaque instant, et requiert l'affichage d'un index (63) pointant ledit premier pas collectif et ledit deuxième pas collectif dans un diagramme (60), ledit diagramme (60) étant muni d'un premier axe (61) et d'un deuxième axe (62) gradués en unités de pas collectif relatifs respectivement au premier pas collectif et au deuxième pas collectif,
   - détermine un paramètre limitant correspondant au paramètre de surveillance le plus proche de sa limite au régime de fonctionnement courant dudit moteur (2, 3),
   - détermine au moins une marge de puissance disponible pour ledit moteur (2, 3), chaque marge de puissance correspondant à la puissance à fournir afin que le paramètre limitant atteigne une limite associée à un desdits régimes,
   - détermine une courbe limite (70) de puissance par marge de puissance et affiche ladite courbe limite (70) dans ledit diagramme (60) pour indiquer au pilote la marge de premier pas collectif et de deuxième pas collectif disponible avant d'atteindre la limite de chaque régime.

2. Procédé selon la revendication 1,
   **caractérisé en ce que** le premier pas collectif et le deuxième pas collectif étant chacun mécaniquement bornés entre deux extremums, on tronque une courbe limite (71) si cette courbe limite atteint un desdits extremums à l'aide d'une droite (100) orthogonale à un desdits axes (62) du diagramme (60) passant par ledit extremum atteint.

3. Procédé selon l'une quelconque des revendications 1 à 2,
   **caractérisé en ce que** ledit calculateur (40) détermine et affiche une courbe d'endommagement (74) de l'installation motrice en déterminant un écart de puissance entre la puissance courante développée par ledit moteur (2,3) et une puissance seuil prédéterminée générant un endommagement minimal.

4. Procédé selon la revendication 3,
   **caractérisé en ce que** ledit endommagement divergeant à partir d'une valeur seuil (202) dans un graphe (200) présentant un paramètre de surveillance en abscisse et l'endommagement en ordonnée, ladite puissance seuil est égale à la puissance développée par le moteur lorsque ledit paramètre de surveillance atteint ladite valeur seuil (202).

5. Procédé selon l'une quelconque des revendications 1 à 4,
   **caractérisé en ce que** ledit calculateur (40) détermine et affiche une courbe de consommation (75) optimale de carburant de l'installation motrice en déterminant un intervalle de puissance entre la puissance courante développée par ledit moteur (2, 3) et une puissance limite prédéterminée, ladite puissance limite prédéterminée correspondant à la puissance à développer afin que ledit aéronef (1) atteigne une vitesse d'avancement prédéterminée (VBR).

6. Procédé selon l'une quelconque des revendications 1 à 5,
   **caractérisé en ce que** ledit index (63) est affiché à l'intersection du premier axe (61) et du deuxième axe (62).

7. Procédé selon l'une quelconque des revendications 1 à 6,
   **caractérisé en ce que** ledit premier axe (61) et ledit deuxième axe (62) sont mobiles l'un par rapport à l'autre, ledit calculateur (40) déplaçant ce premier axe (61) le long du deuxième axe (62) lorsque le deuxième pas collectif varie, et ledit calculateur (40) déplaçant ce deuxième axe (62) le long du premier axe (61) lorsque le premier pas collectif varie.

8. Procédé selon l'une quelconque des revendications 1 à 7,
   **caractérisé en ce que** ledit calculateur (40) déplace les graduations du premier axe (61) lorsque le premier pas collectif varie et déplace les graduations du deuxième axe (62) lorsque le deuxième pas collectif varie, lesdites courbes (70, 74, 75) se déplaçant en conséquence.

9. Procédé selon l'une quelconque des revendications 1 à 8,
   **caractérisé en ce que** ladite pluralité de régimes comprend au moins un régime à choisir dans une liste incluant un régime de décollage, un régime maximal continu, un régime transitoire, un premier régime d'urgence, un deuxième régime d'urgence et un troisième régime d'urgence, lesdits paramètres de surveillance incluant au moins un paramètre à choisir dans une liste incluant la vitesse de rotation d'un générateur de gaz du moteur, le couple du moteur et la température des gaz à l'entrée d'une turbine libre du moteur.

**10.** Procédé selon l'une quelconque des revendications 1 à 9,
**caractérisé en ce que** ladite installation motrice comprenant une pluralité de moteurs (2, 3), ledit calculateur (40) affiche les informations relatives au moteur (2, 3) ayant le paramètre limitant le plus proche de sa limite.

**11.** Procédé selon l'une quelconque des revendications 1 à 10,
**caractérisé en ce que** ledit calculateur (40) détermine et affiche un pointeur (64) prédictif dans ledit diagramme (60), ledit pointeur (64) présentant au début d'une manoeuvre le premier pas collectif et le deuxième pas collectif que l'aéronef devrait atteindre à l'issue de ladite manoeuvre.

**12.** Procédé selon l'une quelconque des revendications 1 à 11,
**caractérisé en ce que** ledit calculateur (40) détermine un paramètre limitant prédictif au début d'une manoeuvre, et affiche une courbe prédictive dans le diagramme du moyen d'affichage, cette courbe prédictive présentant au début d'une manoeuvre l'ensemble des couples premier pas collectif/ deuxième pas collectif engendrant ledit paramètre prédictif.

**13.** Dispositif (10) d'aide au pilotage d'un aéronef (1) comprenant un premier rotor (5) muni d'une pluralité de premières pales (6) ayant un premier pas collectif variable ainsi qu'un deuxième rotor (7) muni d'une pluralité de deuxièmes pales (8) ayant un deuxième pas collectif variable, ledit aéronef (1) ayant une installation motrice pourvue d'au moins un moteur (2, 3) fonctionnant selon une pluralité de régimes, ledit dispositif (10) comportant des capteurs de mesure (20) d'une pluralité de paramètres de surveillance prédéterminés de l'installation motrice,
**caractérisé en ce qu'**il comporte un premier moyen de mesure (27) du premier pas collectif et un deuxième moyen de mesure (28) du deuxième pas collectif ainsi qu'un moyen d'affichage (50) reliés au calculateur (40), ledit dispositif (10) comportant un index (63) commandé par ledit calculateur (40) pointant sur le moyen d'affichage (50) ledit premier pas collectif et ledit deuxième pas collectif dans un diagramme (60) muni d'un premier axe (61) et d'un deuxième axe (62) gradués en unité de pas collectif relatifs respectivement au premier pas collectif et au deuxième pas collectif, ledit calculateur (40) déterminant à l'aide desdits capteurs de mesure (20) au moins une marge de puissance disponible du moteur (2, 3) correspondant à la puissance à fournir afin qu'un paramètre limitant atteigne une limite associée à un desdits régimes pour afficher une courbe limite (70) de puissance disponible par marge de puissance dans ledit diagramme (60) matérialisant pour le pilote la marge de premier pas collectif et de deuxième pas collectif disponible avant d'atteindre la limite d'au moins un régime.

**14.** Dispositif selon la revendication 13,
**caractérisé en ce que**, ledit premier moyen de mesure (27) mesurant le premier pas collectif courant et le deuxième moyen de mesure (28) mesurant le deuxième pas collectif courant en temps réel, ledit dispositif comporte des organes de mesure (29) d'un premier ordre de premier pas collectif et d'un deuxième ordre d'un deuxième pas collectif.

**15.** Aéronef (1) comprenant un premier rotor (5) muni d'une pluralité de premières pales (6) ayant un premier pas collectif variable ainsi qu'un deuxième rotor (7) muni d'une pluralité de deuxièmes pales (8) ayant un deuxième pas collectif variable, ledit aéronef (1) ayant une installation motrice pourvue d'au moins un moteur (2, 3) fonctionnant selon une pluralité de régimes, ledit aéronef (1) ayant une première chaîne de commande (80) incluant une première commande (81) reliée auxdites premières pales (6) et une deuxième chaîne de commande (82) incluant une deuxième commande (83) reliée auxdites deuxièmes pales,
**caractérisé en ce qu'**il comporte un dispositif (10) d'aide au pilotage selon l'une quelconque des revendications 12 à 13.

**16.** Aéronef selon la revendication 15,
**caractérisé en ce qu'**un premier moyen de mesure (27) du premier pas collectif est agencé sur la première chaîne de commande (80), un deuxième moyen de mesure (28) du deuxième pas collectif étant agencé sur la deuxième chaîne de commande (82).

**Patentansprüche**

**1.** Verfahren zur Unterstützung der Steuerung eines Luftfahrzeugs (1) mit einem ersten Rotor (5), der mit einer Mehrzahl erster Rotorblätter (6) versehen ist, die einen ersten variablen kollektiven Anstellwinkel aufweisen, sowie mit einem zweiten Rotor (7), der mit einer Mehrzahl zweiter Rotorblätter (8) versehen ist, die einen zweiten variablen kollektiven Anstellwinkel aufweisen, wobei das Luftfahrzeug (1) eine Antriebsvorrichtung aufweist mit mindestens einem Motor (2, 3), der in einer Mehrzahl von Betriebsarten funktioniert, wobei die Antriebsanordnung durch einen Rechner (40) über eine Mehrzahl von vorbestimmten Überwachungsparametern überwacht wird,
**dadurch gekennzeichnet, dass** der Rechner:

- den ersten aktuellen kollektiven Anstellwinkel und den zweiten aktuellen kollektiven Anstellwinkel zu jeder Zeit bestimmt und die Anzeige eines Zeigers (63) fordert, der den ersten kollektiven Anstellwinkel und den zweiten kollektiven Anstellwinkel in einem Diagramm (60) anzeigt, wobei das Diagramm (60) mit einer ersten Achse (61) und einer zweiten Achse (62) versehen ist, die in Einheiten von kollektiven Anstellwinkeln bezüglich jeweils des ersten kollektiven Anstellwinkels und des zweiten kollektiven Anstellwinkels unterteilt sind,
- einen begrenzenden Parameter bestimmt, der dem Überwachungsparameter entspricht, der seinem Grenzwert in der aktuellen Betriebsart des Motors (2, 3) am nächsten kommt,
- mindestens eine für den Motor (2, 3) verfügbare Leistungsspanne bestimmt, wobei jede Leistungsspanne der zu liefernden Leistung entspricht, damit der Grenzparameter einen Grenzwert erreicht, der mit einem der Betriebsarten verbunden ist,
- eine Grenzkurve (70) der Leistung pro Leistungsspanne bestimmt und diese Grenzkurve (70) in dem Diagramm (60) anzeigt, um dem Piloten die verfügbare Spanne des ersten kollektiven Anstellwinkels und des zweiten kollektive Anstellwinkels anzugeben, bevor die Grenze einer jeden Betriebsart erreicht wird.

2. Verfahren nach Anspruch 1, **dadurch gekennzeichnet, dass** der erste kollektive Anstellwinkel und der zweite kollektive Anstellwinkel jeweils mechanisch begrenzt sind zwischen zwei Extrema, wobei man eine Grenzkurve (71), wenn diese Grenzkurve eines der Extrema erreicht, mit Hilfe einer Geraden (100) abschneidet, die senkrecht zu einer der Achsen (62) des Diagramms (60) ist und durch das erreichte Extremum verläuft.

3. Verfahren nach einem der Ansprüche 1 bis 2, **dadurch gekennzeichnet, dass** der Rechner (40) eine Beschädigungskurve (74) der Motoranordnung bestimmt und anzeigt, indem ein Leistungsunterschied zwischen der von dem Motor (2, 3) entwickelten aktuellen Leistung und einer vorbestimmten Grenzleistung, die eine minimale Beschädigung erzeugt, bestimmt wird.

4. Verfahren nach Anspruch 3, **dadurch gekennzeichnet, dass** die Beschädigung ausgehend von einem Grenzwert (202) in einer Kurve (200), die einen Überwachungsparameter auf der Abszisse und eine Beschädigung auf der Ordinate darstellt, divergiert, wobei die Grenzleistung gleich der von dem Motor entwickelten Leistung ist, wenn der Überwachungsparameter den Grenzwert (202) erreicht.

5. Verfahren nach einem der Ansprüche 1 bis 4, **dadurch gekennzeichnet, dass** der Rechner (40) eine optimale Treibstoffverbrauchskurve (75) der Motoranordnung bestimmt und anzeigt, indem er ein Leistungsintervall zwischen der aktuell von dem Motor (2, 3) entwickelten Leistung und einer vorbestimmten Grenzleistung bestimmt, wobei die vorbestimmte Grenzleistung der Leistung entspricht, die zu entwickeln ist, damit das Luftfahrzeug (1) eine vorbestimmte Vortriebsgeschwindigkeit (VBR) erreicht.

6. Verfahren nach einem der Ansprüche 1 bis 5, **dadurch gekennzeichnet, dass** der Pfeil (63) am Schnittpunkt der ersten Achse (61) mit der zweiten Achse (62) angezeigt ist.

7. Verfahren nach einem der Ansprüche 1 bis 6, **dadurch gekennzeichnet, dass** die erste Achse (61) und die zweite Achse (62) zueinander beweglich sind, wobei der Rechner (40) die erste Achse (61) entlang der zweiten Achse (62) bewegt, wenn sich der zweite kollektive Anstellwinkel ändert, und wobei der Rechner (40) die zweite Achse (62) entlang der ersten Achse (61) bewegt, wenn sich der erste kollektive Anstellwinkel ändert.

8. Verfahren nach einem der Ansprüche 1 bis 7, **dadurch gekennzeichnet, dass** der Rechner (40) die Einteilungen der ersten Achse (61) verschiebt, wenn der erste kollektive Anstellwinkel sich ändert, und die Einteilungen der zweiten Achse (62) verschiebt, wenn sich der zweite kollektive Anstellwinkel ändert, wobei sich die Kurven (70, 74, 75) entsprechend verschieben.

9. Verfahren nach einem der Ansprüche 1 bis 8, **dadurch gekennzeichnet, dass** die Mehrzahl von Betriebsarten mindestens eine Betriebsart aufweist, die aus einer Liste zu wählen ist, die den Abflug, eine maximale kontinuierliche Betriebsart, eine Übergangsbetriebsart, eine erste Notfallbetriebsart, eine zweite Notfallbetriebsart und eine dritte Notfallbetriebsart umfasst, wobei die Überwachungsparameter mindestens einen Parameter aufweisen, der aus einer Liste zu wählen ist, die die Drehzahl eines Gaserzeugers des Motors, das Drehmoment des Motors und die Gastemperatur am Eingang einer freilaufenden Turbine des Motors umfasst.

10. Verfahren nach einem der Ansprüche 1 bis 9, **dadurch gekennzeichnet, dass** die Antriebsanordnung eine Mehrzahl von Motoren (2, 3) aufweist, wobei der Rechner (40) die Informationen bezüglich des Motors (2, 3) anzeigt, der den begrenzenden Parameter aufweist, der seiner Grenze am nächsten ist.

**11.** Verfahren nach einem der Ansprüche 1 bis 10, **dadurch gekennzeichnet, dass** der Rechner (40) einen Vorhersage-Zeiger (64) bestimmt und in dem Diagramm (60) anzeigt, der zu Beginn eines Manövers den ersten kollektiven Anstellwinkel und den zweiten kollektiven Anstellwinkel anzeigt, den das Luftfahrzeug am Ende des Manövers erreichen müsste.

**12.** Verfahren nach einem der Ansprüche 1 bis 11, **dadurch gekennzeichnet, dass** der Rechner (40) zu Beginn eines Manövers einen begrenzenden Vorhersage-Parameter bestimmt und in dem Diagramm des Anzeigemittels eine Vorhersage-Kurve anzeigt, wobei diese Vorhersage-Kurve zu Beginn eines Manövers die Gesamtheit der Paare erster kollektiver Anstellwinkel/zweiter kollektiver Anstellwinkel, die den Vorhersage-Parameter erzeugen, darstellt.

**13.** Vorrichtung zur Unterstützung der Steuerung eines Luftfahrzeugs (1) mit einem ersten Rotor (5), der mit einer Mehrzahl erster Rotorblätter (6) versehen ist, die einen ersten variablen kollektiven Anstellwinkel aufweisen, sowie einem zweiten Rotor (7), der mit einer Mehrzahl von zweiten Rotorblättern (8) versehen ist, die einen zweiten variablen kollektiven Anstellwinkel aufweisen, wobei das Luftfahrzeug (1) eine Antriebsanordnung aufweist, die mit mindestens einem Motor (2, 3) versehen ist, der in einer Mehrzahl von Betriebsarten funktioniert, wobei die Vorrichtung (10) Messfühler (20) für eine Mehrzahl von vorbestimmten Überwachungsparametern der Antriebsanordnung aufweist, **dadurch gekennzeichnet, dass** sie ein erstes Mittel (27) zur Messung des ersten kollektiven Anstellwinkels und ein zweites Mittel (28) zur Messung des zweiten kollektiven Anstellwinkels sowie ein Anzeigemittel (50) aufweist, die mit einem Rechner (40) verbunden sind, wobei die Vorrichtung (10) einen Pfeil (63) aufweist, der von dem Rechner (40) gesteuert wird und der auf dem Anzeigemittel (50) den ersten kollektiven Anstellwinkel und den zweiten kollektiven Anstellwinkel in einem Diagramm (60) anzeigt, welches mit einer ersten Achse (61) und einer zweiten Achse (62) versehen ist, die in Einheiten eines relativen kollektiven Anstellwinkels jeweils des ersten kollektiven Anstellwinkels und des zweiten kollektiven Anstellwinkels unterteilt sind, wobei der Rechner (40) mit Hilfe der Messfühler (20) mindestens eine verfügbare Leistungsspanne des Motors (2, 3) bestimmt, die der Leistung entspricht, die zu liefern ist, damit ein begrenzender Parameter eine Grenze erreicht, die mit einer der Betriebsarten verbunden ist, um eine Grenzkurve (70) der verfügbaren Leistung pro Leistungsspanne in dem Diagramm (60) anzuzeigen, die dem Piloten die verfügbare Marge des ersten kollektiven Verstellwinkels und des zweiten kollektiven Verstellwinkels angibt, bevor der Grenzwert mindestens einer Betriebsart erreicht wird.

**14.** Vorrichtung nach Anspruch 13, **dadurch gekennzeichnet, dass** der erste Messfühler (27) den aktuellen ersten kollektiven Anstellwinkel misst und der zweite Messfühler (28) den zweiten aktuellen kollektiven Anstellwinkel in Echtzeit misst, wobei die Vorrichtung Organe (29) zur Messung einer ersten Ordnung des kollektiven Anstellwinkels und einer zweiten Ordnung eines zweiten kollektiven Anstellwinkels aufweist.

**15.** Luftfahrzeug (1) mit einem ersten Rotor (5), der mit einer Mehrzahl erster Rotorblätter (6) versehen ist, die einen ersten variablen kollektiven Anstellwinkel aufweisen, sowie mit einem zweiten Rotor (7), der mit einer Mehrzahl zweiter Rotorblätter (8) versehen ist, die einen zweiten variablen kollektiven Anstellwinkel aufweisen, wobei das Luftfahrzeug (1) eine Antriebsanordnung aufweist, die mit mindestens einem Motor (2, 3) versehen ist, der in einer Mehrzahl von Betriebsarten funktioniert, wobei das Luftfahrzeug (1) eine erste Steuerungskette (80) aufweist, die eine erste Steuerung (81) umfasst, die mit den ersten Rotorblättern (6) verbunden ist, und eine zweite Steuerungskette (82), die eine zweite Steuerung (83) umfasst, die mit den zweiten Rotorblättern verbunden ist, **dadurch gekennzeichnet, dass** es eine Vorrichtung (10) zur Unterstützung der Steuerung nach einem der Ansprüche 12 bis 13 aufweist.

**16.** Luftfahrzeug nach Anspruch 15, **dadurch gekennzeichnet, dass** ein erster Fühler (27) zur Messung des ersten kollektiven Anstellwinkels auf der ersten Steuerungskette (80) angeordnet ist und ein zweiter Fühler (28) zur Messung des zweiten kollektiven Anstellwinkels auf der zweiten Steuerungskette (82) angeordnet ist.

**Claims**

**1.** Method of assisting the piloting of an aircraft (1) comprising a first rotor (5) having a plurality of first blades (6) with a first variable collective pitch, and a second rotor (7) having a plurality of second blades (8) with a second variable collective pitch, said aircraft (1) having a power plant provided with at least one engine (2, 3) operating in a plurality of ratings, said power plant being monitored by a computer (40) via a plurality of predetermined monitoring parameters, **characterised in that** said computer:

- determines the current first collective pitch and the current second collective pitch at each instant, and causes an index (63) to be displayed, said index pointing to said first collective pitch and to said second collective pitch in a diagram (60), said diagram (60) having a first axis (61) and a second axis (62) that are graduated in collective pitch units relating respectively to the first collective pitch and to the second collective pitch;
- determines a limiting parameter corresponding to the monitoring parameter that is the closest to its limit in the current operating rating of said engine (2, 3);
- determines at least one available power margin for said engine (2, 3), each power margin corresponding to the power to be delivered in order for the limiting parameter to reach a limit associated with one of said ratings;
- determines one power limit curve (70) per power margin and displays said limit curve (70) in said diagram (60) to indicate to the pilot the first collective pitch margin and the second collective pitch margin that are available before reaching the limit for each rating.

2. Method according to Claim 1,
**characterised in that** the first collective pitch and the second collective pitch are each mechanically bounded between two extremums, and if a limit curve (71) reaches one of said extremums, said limit curve is truncated by means of a straight line (100) orthogonal to one of said axes (62) of the diagram (60) and passing through said extremum that has been reached.

3. Method according to any one of claims 1 to 2,
**characterised in that** said computer (40) determines and displays a damage curve (74) representing the damage of the power plant by determining a power difference between the current power developed by said engine (2, 3) and a predetermined threshold power generating a minimum amount of damage.

4. Method according to Claim 3,
**characterised in that** said damage diverges from a threshold value (202) in a graph (200) presenting a monitoring parameter along the abscissa and damage up the ordinate, said threshold power being equal to the power developed by the engine when said monitoring parameter reaches said threshold value (202).

5. Method according to any one of Claims 1 to 4, **characterised in that** said computer (40) determines and displays an optimum fuel consumption curve (75) for the power plant by determining a power gap between the current power being developed by said engine (2, 3) and a predetermined limit power, said predetermined limit power corresponding to the power to be developed in order for said aircraft (1) to reach a predetermined forward speed (VBR).

6. Method according to any one of Claims 1 to 5,
**characterised in that** said index (63) is displayed at the intersection between the first axis (61) and the second axis (62).

7. Method according to any one of Claims 1 to 6,
**characterised in that** said first axis (61) and said second axis (62) are movable relative to each other, said computer (40) moving the first axis (61) along the second axis (62) when the second collective pitch varies, and said computer (40) moving the second axis (62) along the first axis (61) when the first collective pitch varies.

8. Method according to any one of Claims 1 to 7,
**characterised in that** said computer (40) moves the graduations of the first axis (61) when the first collective pitch varies and moves the graduations of the second axis (62) when the second collective pitch varies, said curves (70, 74, 75) moving accordingly.

9. Method according to any one of Claims 1 to 8, **characterised in that** said plurality of ratings comprises at least one rating to be selected from a list including a takeoff rating, a maximum continuous rating, a transient rating, a first emergency rating, a second emergency rating, and a third emergency rating, said monitoring parameters including at least one parameter to be selected from a list including the speed of rotation of a gas generator of the engine, the torque of the engine, and the temperature of the gases at the inlet to a free turbine of the engine.

10. Method according to any one of Claims 1 to 9,
**characterised in that** said power plant comprises a plurality of engines (2, 3), and said computer (40) displays information relating to the engine (2, 3) having the limiting parameter that is closest to its limit.

11. Method according to any one of Claims 1 to 10,
**characterised in that** said computer (40) determines and displays a predictive pointer (64) in said diagram (60), said pointer (64) presenting at the beginning of a manoeuvre the first collective pitch and the second collective pitch that the aircraft ought to reach at the end of said manoeuvre.

12. Method according to any one of Claims 1 to 11,
**characterised in that** said computer (40) determines a predictive limiting parameter at the beginning of a manoeuvre and displays a predictive curve in the diagram of the display means, said predictive curve presenting at the beginning of a manoeuvre all of the first collective pitch/second collective pitch pairs that generate said predictive parameter.

**13.** Device (10) for assisting the piloting of an aircraft (1) comprising a first rotor (5) having a plurality of first blades (6) with a first variable collective pitch, and a second rotor (7) having a plurality of second blades (8) with a second variable collective pitch, said aircraft (1) having a power plant provided with at least one engine (2, 3) operating in a plurality of ratings, said device (10) comprising measurement sensors (20) for measuring a plurality of predetermined monitoring parameters of the power plant, **characterised in that** the device comprises a first measurement means (27) for measuring the first collective pitch and a second measurement means (28) for measuring the second collective pitch together with a display means (50) connected to the computer (40), said device (10) comprising an index (63) controlled by said computer (40) and pointing on the display means (50) to said first collective pitch and to said second collective pitch in a diagram (60) having a first axis (61) and a second axis (62) that are graduated in collective pitch units relating respectively to the first collective pitch and to the second collective pitch, said computer (40) using said measurement sensors (20) to determine at least one available power margin of the engine (2, 3) corresponding to the power to be supplied in order for a limiting parameter to reach a limit associated with one of said ratings so as to display one available power limit curve (70) per power margin in said diagram (60), thereby indicating to the pilot the first collective pitch margin and the second collective pitch margin that are available before reaching the limit of at least one rating.

**14.** Device according to Claim 13, **characterised in that** said first measurement means (27) measures the first current collective pitch and said second measurement means (28) measures the second current collective pitch in real time, and said device comprises measurement members (29) for measuring a first order of a first collective pitch and a second order of a second collective pitch.

**15.** Aircraft (1) comprising a first rotor (5) having a plurality of first blades (6) with a first variable collective pitch, and a second rotor (7) having a plurality of second blades (8) with a second variable collective pitch, said aircraft (1) having a power plant provided with at least one engine (2, 3) operating in a plurality of ratings, said aircraft (1) having a first control system (80) including a first control (81) connected to said first blades (6) and a second control system (82) including a second control (83) connected to said second blades, **characterised in that** the aircraft comprises a piloting assistance device (10) according to any one of Claims 12 to 13.

**16.** Aircraft according to Claim 15, **characterised in that** a first measurement means (27) for measuring the first collective pitch is arranged in the first command chain (80), with a second measurement means (28) for measuring the second collective pitch being arranged in the second command chain (82).

**Fig.1**

**Fig.2**

**Fig.3**

**Fig.4**

Fig.5

Fig.6

Fig.7

Fig.8

Fig.9

Fig.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2749545 A
- FR 2756256
- EP 0811183 A
- FR 2749545

- EP 2258615 A
- US 2005278084 A
- FR 2871520